# EUROPEAN PATENT APPLICATION

(11) **EP 1 507 420 A1**
(43) Date of publication of application: **16.02.2005**
(21) Application number: 04254518.6
(22) Date of filing: 28.07.2004
(51) Int. Cl.: H04Q 7/22, H04L 12/58

(54) **Routing of text based messages in a wireless telephone network depending on a user profile**

(30) Priority: 15.08.2003 US 641442
(71) Applicant: LUCENT TECHNOLOGIES INC., Murray Hill, New Jersey 07974-0636 (US)
(72) Inventor: Gurbani, Vijay K., Lisle, IL 60532 (US); Sun, Xian He, Darien, Illinois 60561 (US)
(74) Representative: Watts, Christopher Malcolm Kelway, Dr.

(57) **Abstract**

Systems and techniques for routing and transmission of short message service messages are described. A user profile (108) associated with a wireless telephone (104A,104B) includes conditions relating to a user's need or desire to receive a text message through a device other than the wireless telephone and the user's preferences in the event of each of the conditions. The conditions include whether a user's instant messaging client (116) is active. If the client is active, the user profile include the address of the client. When a text message arrives for the user at a wireless telephone switching center (102), the switching center determines if the message is to be sent to the user through the wireless telephone network, through the internet messaging client or both. Depending on the desired routing of the message, the message is transmitted through the wireless network or formatted and sent as an instant messaging message, or both.

## Description

### Field of the Invention

The present invention relates generally to improvements in wireless communication. More particularly, the invention relates to advantageous techniques and systems for routing a text message directed to a user's wireless device to an alternative destination accessible by a user.

### Background of the Invention

Wireless communication services are continually becoming more widely used and more versatile. A relatively new feature of wireless communication devices, such as wireless telephones, is their ability to send and receive text messages using a feature commonly called short message service (SMS). SMS allows users to send messages to other users without needing to speak and thereby disturb others, and allows users to receive messages in a quiet and unobtrusive way. The ability to receive messages without disturbing others can be of great importance, because the sender of a message may not know where a recipient will be and may not know whether the user can receive a wireless call without disturbing others. Being able to transmit a text message to a user allows the user to receive useful information almost anywhere.

In order to receive an SMS message at the time it is sent, a user receiving the message must have his or her SMS capable mobile device, such as a wireless telephone, in his or her possession and the telephone must be turned on. If the telephone cannot be reached, for example, if it is turned off or if the battery is discharged, the message will be queued for later transmission. If the telephone is turned on but is not in the user's possession, the message will obviously be delivered, but it will be of no benefit to the user until the user has an opportunity to read it.

As SMS becomes more and more widespread, it is likely to be relied on for transmitting messages of greater and greater importance. It may represent a significant hardship to some users if they fail to receive an important message because they do not have their wireless telephone in their possession or if its battery is discharged. Moreover, it may represent a significant inconvenience for a user to contact all of his or her possible correspondents to let them know that his or her telephone cannot be reached.

Many wireless telephone users also subscribe to various network services that allow fast and easy text communication. Such services are widely offered through the Internet at low or no cost. Many of these services do not require a user to be at one particular location. Instead, a user may invoke a service from a computer or terminal having a suitable Internet connection and provide login information in order to perform communication. One particularly popular and widely used type of service is an instant messaging service, which allows a user to invoke an instant messaging client and use an instant messaging window to send and receive text messages. Such a client may reside in the background of a device having the capability to receive instant messaging messages directed to the user. Typically, such devices include any devices having Internet capability and an active connection, with specific examples including a user's workstation, a laptop, or a Personal Digital Assistant (PDA)).

The user's instant messaging device may maintain a minimized or unobtrusive window, but may allow a user to be instantly alerted to instant messages that are received. Frequently, wireless telephone users have access to workstations or other Internet-capable devices capable of hosting instant messaging clients.

There exists, therefore, a need for automatic copying or diversion of SMS messages to an alternative communication system such as an instant messaging client, allowing a user to gain relatively instantaneous access to the message.

### Summary of the Invention

A wireless communication system according to an aspect of the present invention suitably includes a user profile for each user. The user profile includes user preferences relating to receiving SMS messages. The user preferences specify various conditions that may prevail, for example, whether or not a user's telephone is turned off, whether the user has indicated that he or she is away from the telephone or other conditions that relate to a user's need or desire to receive messages through a device other than the telephone. Each user profile may suitably include information indicating whether or not a user's instant messaging (IM) client is active and the address of the instant messaging client. The address may suitably be the Internet or IP address of the client, or alternatively may suitably be an identification of the intemet messaging service being used, along with the user's usemame on the service. The user profile may suitably be updated by a server that receives a message from the instant messaging client and updates the user profile with information about the use and address of the instant messaging client. When an SMS message is sent to the user, a message switching center in the network consults the user profile to determine the user preferences relating to the correct disposition of the message, and checks the prevailing conditions, both as indicated in the user profile and as detected through queries to the user's telephone. If the preferences and conditions indicate that the message is to be transferred as an SMS message, the message is transmitted to the user's telephone. If the preferences and conditions indicate that the message is to be transferred as an IM message, the message is passed to the server which formats the message as an IM message and transmits it to the user's IM client.

A more complete understanding of the present invention, as well as further features and advantages of the invention, will be apparent from the following Detailed Description and the accompanying drawings.

### Brief Description of the Drawings

Fig. 1 illustrates a wireless communication network providing the capability to relay a short message service message in the form of an instant messaging message according to an aspect of the present invention;
Fig. 2 illustrates additional details of a message switching center and a server belonging to the network of Fig. 1;
Fig. 3 illustrates an interface form allowing a user to update conditions and preferences for routing of messages according to an aspect of the present invention; and
Fig. 4 illustrates a process of message transmission according to an aspect of the present invention.

### Detailed Description

The present invention will be described more fully hereinafter with reference to the accompanying drawings, in which several presently preferred embodiments of the invention are shown. This invention may, however, be embodied in various forms and should not be construed as limited to the embodiments set forth herein. Rather, these embodiments are provided so that this disclosure will be thorough and complete, and will fully convey the scope of the invention to those skilled in the art.

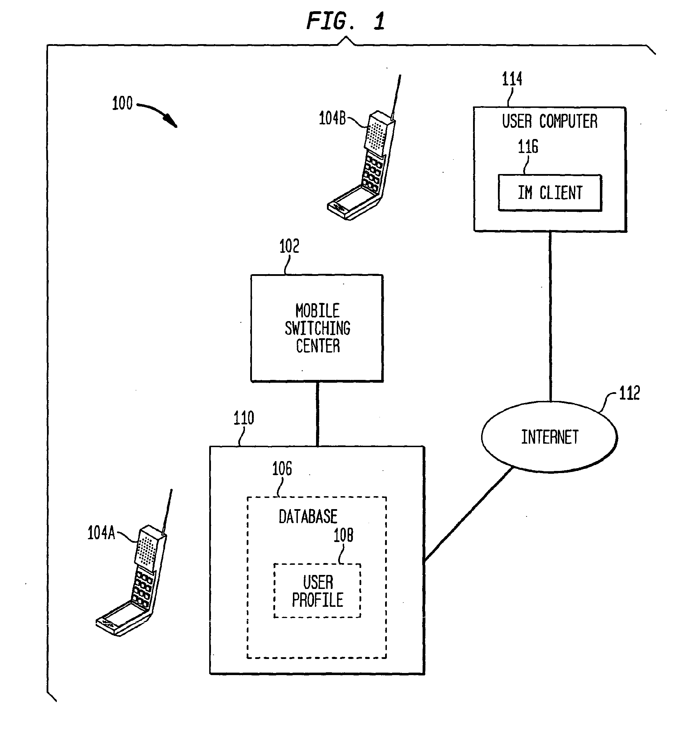

Fig. 1 illustrates a wireless communication network 100 including a mobile switching center (MSC) 102, that supports a plurality of wireless devices, such as wireless telephones, of which the wireless telephones 104A and 104B are examples. The telephones 104A and 104B are equipped to send SMS messages to one another using the MSC 102 as an intermediary. For example, a user of the telephone 104A may prepare and send an SMS message addressed to the telephone 104B. This message is transmitted wirelessly to the MSC 102, which searches for the telephone 104B and relays the message. It will be recognized that while only one MSC 102 and two telephones 104A and 104B are illustrated here, a system such as the system 100 may include many MSCs and wireless telephones, with a sending wireless telephone transmitting a message to the MSC serving its local area, with the message then being transmitted through wired or wireless connections to an MSC serving the recipient wireless telephone and from there to the recipient wireless telephone.

The MSC 102 includes or has access to a user database 106 including a user profile for each user of the telephones 104A and 104B, and similar telephones. In the following discussion, the telephone 104B will be treated as a recipient of a message, so a user profile 108 associated with the telephone 104B is illustrated here. It will be recognized, however, that the database 106 will include a user profile for the telephone 104A as well, in addition to user profiles for all other telephones supported by the system 100.

The database 106 may suitably be hosted on a server 110 that provides a connection to the Internet 112, in order to provide Internet access for transmission of messages to and from the telephones 104A and 104B through the Internet 112. The connection between the server 110 and the Internet 112 also allows each user access to his or her user profile through any device capable of communicating with the server 110 through an Internet connection, such as a computer 114 operated by the user of the telephone 104B. While a computer 114 is shown here, it will be recognized that numerous alternative devices exist, and that the teachings of the present invention may be practiced using any device capable of maintaining an Internet connection and providing the necessary services, for example properly programmed personal digital assistants (PDAs). The user profile 108 may be entered and updated using the telephone 104B or alternatively through the computer 114 or any other computer operated by the user of the telephone 104B and having a connection to the Internet 112. The user database 106 is accessible through the Internet 112 so that users will have a convenient way to view and update information about their user accounts, including their user profiles.

The user's profile, such as the user profile 108 associated with the telephone 104B, includes user choices about how SMS messages are to be managed. The profile may suitably include a variety of conditions, with selections about handling of SMS messages in the presence of a specified condition. Specified conditions may, for example, include the fact that the telephone is turned off or the battery is discharged. Additionally, a profile may include an advisory that a user is away from his or her telephone. A user may, for example, use a computer such as the computer 114 to update his or her profile if he or she notices that his or her telephone has been left behind.

The handling of messages suitably includes transmission of the message to a user's instant messaging (IM) address when appropriate. Many users subscribe to IM services, accessible through the Internet 112, using a computer such as the computer 114. Instant messages may be directed to the instant messaging service to which the user subscribes, with the user being identified with a usemame. If the user has logged in to the instant messaging service at a computer such as the computer 114, the message is displayed by an instant messaging client running on the computer. Typically, a user must be actively logged in using the instant messaging client before the message can be transmitted. The MSC 102 maintains a connection to the server 110, which allows the MSC 102 to pass messages to the server 110 for transmission through the Internet 112. When a user maintaining a profile in the database 106 activates his or her IM client, the client alerts the server 110 that it is active and provides the server 110 with its address. The address is stored in the user's profile in the database 106, along with a notation that the IM client is active. In the present case, the user of the telephone 104B has an IM client 116, residing on the computer 114. When the user logs in to the client 116, the client 116 communicates with the server 110 through the Internet 112, furnishing the server 110 with its address and the fact that it is active. The address of the IM client 116 is stored in the user profile 108, along with a notification that the client 116 is active.

The user profile 108 for the user of the telephone 104B includes possible conditions relating to SMS messages addressed to the telephone 104B; and instructions for message handling for each of the conditions. The user profile 108 includes an instant messaging address for the user, which in the present exemplary embodiment is an identification of the service employed by the user and the usemame of the user on that service. In addition, the user profile 108 includes instructions for routing of messages in the event of each of a number of specified conditions. If no instruction for a particular condition is present in the profile 108, the user did not specify any special action to be taken in the event of the condition. In this case, no IM message will be sent, and an SMS message will simply be transmitted in the normal way and queued if the condition is such that the message cannot immediately be transferred to the telephone 104B.

The various conditions that may exist include that the telephone 104B is turned off, that the telephone is not turned off but the battery does not retain enough power to allow reception and reading of a message, that the user has indicated that he or she is away from the telephone or that the user has directed special message handling instead of or in addition to conventional SMS transmission. The conditions may also include the fact that the user's instant messaging client is active or inactive. For any condition, the user may direct that the message be sent as an IM message and that no SMS message be sent, that the message may be sent as an IM message in addition to an SMS message, or that only an SMS message be sent. This last choice is the default condition and will be performed if no selection is made. In addition, the user profile includes the fact that the user is or is not logged in using his or her instant messaging client. If the user is not logged in to the IM client, the user will not be able to receive an instant message.

Suppose that the user of the telephone 104B is away from the telephone 104B and is working at the computer 114, logged into the IM client 116. The address of the IM client is therefore stored in the profile 108, along with a notation that the IM client 116 is active. Suppose the user of the telephone 104A sends an SMS message addressed to the telephone 104B. The MSC 102 receives and examines the message, and looks up the user profile for the telephone 104B in the database 106. The MSC 102 examines the conditions listed in the profile 108, and determines which conditions are present. For example, the MSC 102 can check the connection to determine if the telephone is turned off or the power is very low. Other conditions may be indicated in the profile itself, for example, the fact that the user has indicated that he or she is away from the telephone 104B, and, in the present case, the fact that the client IM 116 is active. The MSC 102 then prepares the message for transmission in the manner that is appropriate for the existing conditions.

For example, suppose that the telephone 104B is turned off, and that the profile 108 directs that an SMS message is to be sent to the telephone 104B in such a case, and that the message is also to be sent to the user's IM address if the IM client 116 is active.

The MSC 102 transmits the message to the telephone 104B, and also transfers the message to the server 110. The server 110 examines the user profile 108 to determine the action to be taken. In this case, the message is to be transmitted using IM, so the server 110 further examines the user profile 108 to determine the address of the client 116. The server 110 transmits the message to the client 116, through the Internet 112.

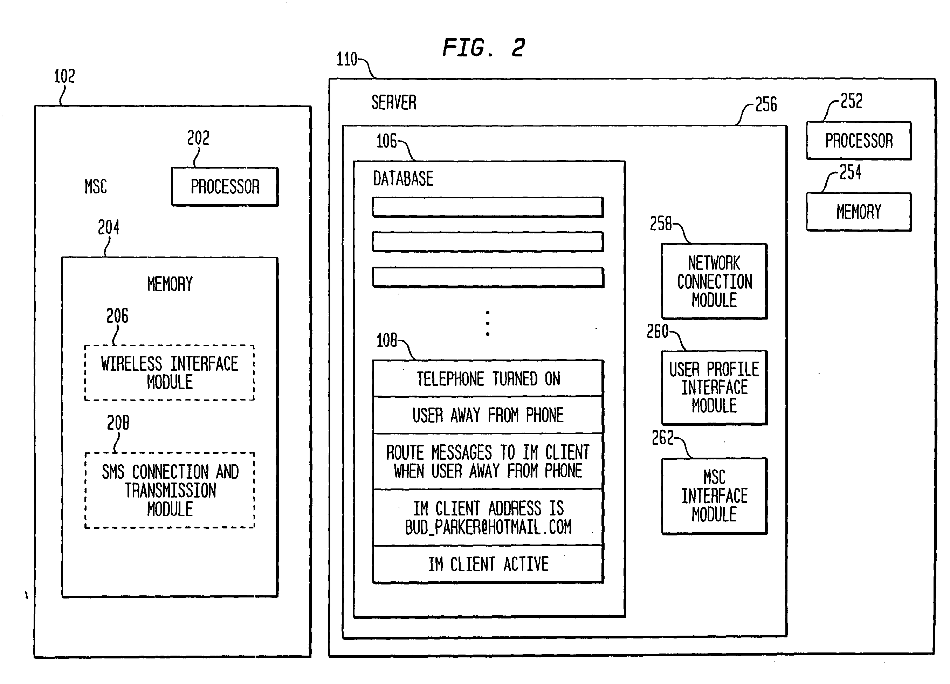

Fig. 2 illustrates additional details of the MSC 102 and the server 110, showing details of the user database 106 and the user profile 108, as well as elements within the MSC 102 and the server 110 used to transmit SMS messages. The MSC 102 includes a processor 202 and memory 204, a wireless interface module 206 and an SMS connection and transmission module 208. The wireless interface module 206 and the SMS connection and transmission module 208 are preferably implemented as software residing in the memory 204 and executed by the processor 202. The MSC 102 typically includes additional elements for managing wireless communication, but these are not illustrated or discussed here in order to avoid unnecessary complexity.

When an SMS message arrives at the MSC 102, it is processed and interpreted by the wireless interface module 206. The wireless interface module 206 identifies the message as an SMS message and identifies the destination telephone. In the present case, the recipient telephone is the telephone 104B of Fig. 1. The destination telephone is identified by the telephone number to which the message is transmitted. This telephone number is received from the sending telephone, in this case the telephone 104A of Fig. 1, and transferred to the SMS connection and transmission module 208 by the wireless interface module 206. The SMS connection and transmission module 208 uses the telephone number as an index to search the database 106 in order to find the user profile 108 associated with the telephone 104B of Fig. 1. The SMS connection and transmission module 208 examines the user profile 108 to determine the user selections for handling of SMS transmissions and to determine the conditions that prevail with respect to the telephone 104B. As noted above, these conditions may include status of the telephone 104B, for example, whether or not the telephone 104B is turned off, previous notations by a user, for example, whether or not the user has indicated that he or she is away from the telephone, and status of a user's IM connection. If necessary to determine the disposition of the message, the connection and transmission module 208 also queries the wireless interface module 206 to determine the status of the telephone 104B. If the telephone 104B is off or powered down, the connection and transmission module 208 notes this status and performs the instruction for the condition associated with this status, for example, formatting the SMS message into an IM and passing it to the server 110 for transmission to the IM client 116 of Fig. 1.

If the user selection for the prevailing condition includes transmission of an SMS message, the SMS connection and transmission module 208 prepares the SMS message and passes it to the wireless interface 206 for transmission. If the selection includes transmission of an IM, the SMS connection and transmission module passes the SMS message to the server 110, to allow the server 110 to prepare and transmit an IM message.

The server 110 includes a processor 252, memory 254 and long term storage 256. The database 106 suitably resides on the long term storage 256. The server also includes a network connection module 258, for receiving information relating to a user's IM connection and for transmitting IM messages to be routed to the user. The server 110 also includes a user profile interface module 260, for examining and updating user profiles stored in the database 106, and an MSC interface module 262, for receiving SMS messages for transmission, as well as additional information, such as the status of the telephone to which an SMS is directed.

Whenever a user of the system 100 of Fig. 1 activates his or her IM client, such as the IM client 116 associated with the telephone 104B of Fig. 1, the IM client sends a message to the server 110 indicating that it is active and providing the server 110 with its IP address or alternative form of address, such as an IM domain and usemame that can be used to route messages to the IM client. This message is handled by the network connection module 258, which updates the database 106 with the information. When an SMS message needs to be transmitted as an IM message, the server 110 receives the SMS message from the MSC 102, using the MSC interface module 262. The MSC interface module 262 prepares an IM message, including the address of the user's IM client, which is retrieved from the database 106. The IM message is passed to the network connection module 258, which routes it to the user's IM client.

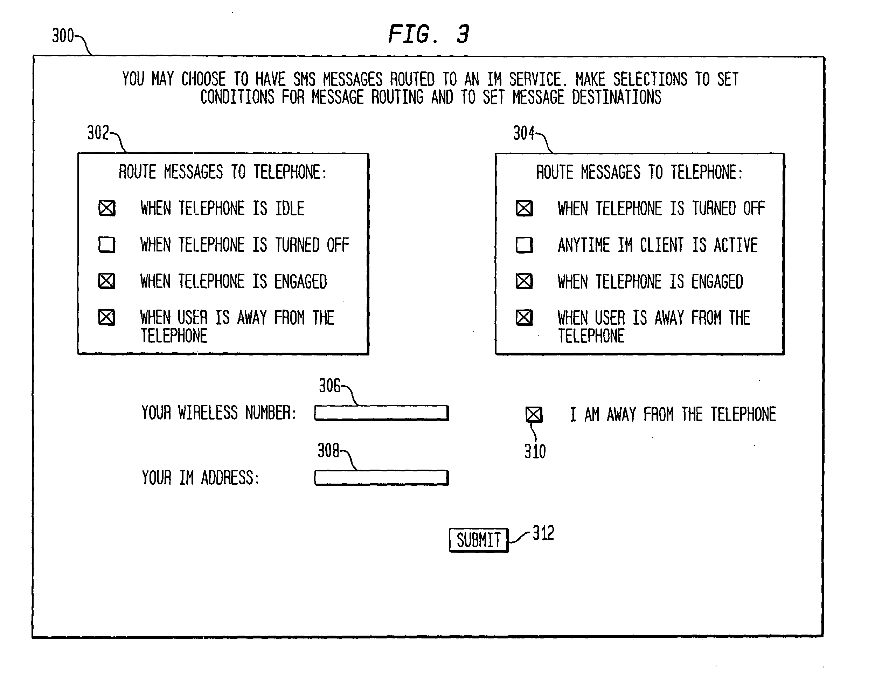

Fig. 3 illustrates a form 300 for providing information to be stored in the user profile 108. The form 300 includes routing selection command groups 302 and 304, for setting conditions for routing of messages to a telephone or an IM client, respectively. The form 300 further includes fields 306 and 308, allowing a user to indicate his or her wireless telephone number and IM client address, respectively. The IM client address may suitably be entered as an identifier of an IM service combined with a usemame for the user on that service. Alternatively, if desired, the address of the user's IM client may be provided in the form of an IP address. The form 300 also includes a selection box 310, allowing the user to indicate whether he or she is away from the telephone, as well as a "submit" button 312, allowing submission of the information for storage in the user profile 108. The form 300 as illustrated here is suitable for use with a workstation, computer or similar device, but it will be recognized that a form similar to the form 300 could be displayed and used with a user's wireless telephone, by adapting the form to be compatible with the user interface provided by such a telephone.

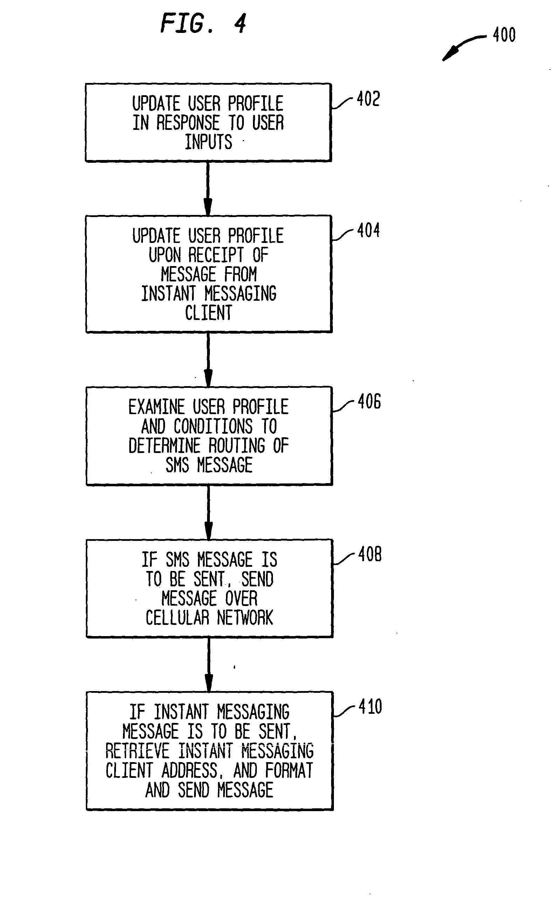

Fig. 4 illustrates a process of SMS message routing according to an aspect of the present invention. At step 402, in response to user inputs, a user profile is updated with information about the disposition of SMS messages intended for a wireless telephone associated with the user. The user profile includes various conditions that may prevail with respect to the telephone, for example, the telephone being off or in a low battery state or the user being away from the telephone or desiring an alternative routing for SMS messages. The user may provide the inputs using the telephone or through an alternative connection to the user profile.

At step 404, upon initiation of an instant messaging client by a user and receipt of a message from the client providing notice that it is active, the user profile is updated with the client address and the fact that the client is active. At step 406, upon receipt of an SMS message directed to the user's telephone, the user profile and the status of the telephone is examined, and the prevailing conditions and instructions associated with the conditions are examined to determine the proper routing of the SMS message. At step 408, if an SMS message is to be sent, the message is transmitted to the telephone over a wireless network. At step 410, if an IM message is to be sent, the address of the user's IM client is retrieved from the user profile, the SMS message is processed and formatted in order to create an IM message and the IM message is routed to the user's IM client.

While the present invention has been disclosed in the context of various aspects of presently preferred embodiments, it will be recognized that the invention may be suitably applied to other environments consistent with the claims which follow.

## Claims

1. A system for routing of text based messages originating on a wireless telephone network and directed to a wireless telephone, comprising:
a server for providing a connection to a destination for receiving text messages that is designated as an alternative destination to the telephone and for formatting and transmitting text messages to the alternative destination;
a mobile switching center for receiving a text based message from a transmitting wireless telephone, the switching center being operative to examine a user profile associated with a receiving telephone to which the message is directed in order to determine user preferences for routing of the message, the switching center being further operative to identify conditions influencing the desired routing of the message and to transmit the message to the receiving telephone as a text based message if appropriate or, if appropriate, to deliver the message to the server for formatting and delivery to the alternative destination designated for receiving text messages, the destination being associated with the user of the receiving telephone.

2. The system of claim 1, wherein the server receives messages from the destination associated with the telephone and updates the user profile associated with the telephone with the status and address of the destination.

3. The system of claim 2, wherein the conditions relating to routing of messages include the status of the receiving telephone.

4. The system of claim 3, wherein the conditions relating to routing of messages include status indicators specified by the user.

5. The system of claim 4, wherein the destination for receiving text messages from the server is an instant messaging client and wherein messages are transmitted from the server over a data packet connection through the Internet.

6. The system of claim 5, wherein the conditions relating to routing of messages include whether the instant messaging client is active or inactive.

7. A method of routing of text messages to a user of a wireless telephone, comprising the steps of:
updating a user profile associated with the wireless telephone with conditions and preferences relating to routing of the text messages;
upon receiving a text message directed to the wireless telephone, examining the user profile and the prevailing conditions to determine the appropriate routing of the message; and
routing the message to the telephone over a wireless telephone network or to an alternative destination depending on the preferences and conditions stored in the user profile and the prevailing conditions.

8. The method of claim 7, wherein the alternative destination is an instant messaging client associated with the user of the wireless telephone to which the message is directed.

9. The method of claim 8, where the step of updating the user profile includes receiving a message from the instant messaging client indicating its status and address and updating the user profile with the status and address of the instant messaging client.

10. The method of claim 9, wherein the examining the prevailing conditions includes interrogating the telephone to determine its status and examining the user profile to identify specified conditions indicated by user inputs.
